# EUROPEAN PATENT SPECIFICATION

(11) **EP 0 743 495 B1**
(45) Date of publication and mention of the grant of the patent: **29.12.1999**
(21) Application number: 96201305.8
(22) Date of filing: 13.05.1996
(51) Int. Cl.: F24J 2/10, F24J 2/50

(54) **Radiation heating device**
Strahlungsheizungsanlage
Appareil de chauffage par rayonnement

(30) Priority: 12.05.1995 NL 1000357
(43) Date of publication of application: 20.11.1996
(73) Proprietor: ZONNE-ENERGIE NEDERLAND B.V., NL-5652 AK Eindhoven (NL)
(72) Inventor: Schaap, Antonius, Bernardus, NL-1222 LN Hilversum (NL); van Dam, Johannes, NL-5512 BE Vessem (NL)
(74) Representative: Bartelds, Erik

(56) References cited:
- EP-A- 0 601 526
- AU-B- 530 878
- DE-A- 3 214 765
- DE-A- 4 123 096
- DE-U- 8 816 350
- DE-U- 9 301 285
- FR-A- 2 385 054
- FR-A- 2 481 785
- US-A- 4 236 507
- US-A- 4 294 231
- US-A- 4 561 424

## Description

The invention relates to a device for heating a medium by radiation, a distribution system provided with a radiation heating device, and a building in which such a distribution system is arranged.

The invention relates particularly to a device for heating a medium by radiation, provided with a tubular member which is arranged in a housing having at least one transparent wall and at least one mirror surface and through which the medium for heating flows, and a transparent insulating sleeve enclosing the tubular member with an interspace. Such a device, which is generally known under the name of solar collector, is known for instance from AU-B-530 878.

This known solar collector consists of a rectangular housing with relatively low side walls which is closed at the top by a curved transparent plate of perspex. Arranged in the housing is a tubular heat exchanger through which the water for heating flows. Inside the tubular heat exchanger is situated a storage tank toward which the water heated thereby flows as a result of a thermo-syphonic action. The heat exchanger is enclosed by a perspex insulating sleeve placed at a distance therearound. The housing is arranged on the roof of a building, for instance a residential dwelling, and the solar collector is connected via pipes which protrude through the roof of the building to a pipe system for the heated water situated inside the building. An advantage of this solar collector is that the housing requires practically no insulation because the storage tank situated therein is enclosed and thus shielded by the heat exchanger. A drawback of the solar collector known from this document is that due to the combination of a perspex cover plate and a perspex insulating sleeve relatively little sunlight ultimately falls onto the heat exchanger.

Another known type of solar collector is the so-called ICS (Integrated Collector Storage), wherein the storage tank is integrated into the collector. Such an ICS is described for instance in the German Gebrauchsmuster 9211758 and consists of a rectangular housing let into the roof of a building and covered on its upper side with a glass plate. Arranged in the housing along the walls are mirrors which are all directed such that the greater part of the sunlight falling into the housing is reflected onto a container filled with water and placed in the middle of the housing. This container, which is normally coated on the outside with an absorbent layer, for instance a black paint layer, is connected through an inlet and outlet line to for instance the hot water supply in a house. The water present in the container is heated by the solar radiation falling directly onto the container and by the radiation passing through the container which is reflected back onto the container by the mirrors. In order to prevent as far as possible loss of heat from the storage tank, a transparent insulating layer is arranged on the inside of the glass plate, for instance in the form of a transparent plastic honeycomb construction which is commercially available under the name "AREL". Insulation material, for instance PUR foam, is likewise arranged between the mirrors and the walls of the housing.

The known ICS has a number of drawbacks. For instance, due to its construction it occupies a comparatively large amount of space, whereby placing on the outside of a building, for instance on the roof thereof, generally meets with great objections of both architectural and aesthetic nature. The known ICS must therefore be let into the roof, whereby the roof construction must be interrupted, which entails extra investment in respect of strengthening the construction, sealing and moisture management. The manufacturing costs of the known ICS are moreover considerable as a consequence of the large quantity of material incorporated therein and the complicated structure.

The invention therefore has for its object to provide a radiation heating device of the above described type wherein these drawbacks do not occur. This is achieved according to the invention in that the insulating sleeve comprises a transparent foil tensioned on a plurality of supports. By embodying the insulating sleeve as foil a simple, light weight and inexpensive construction is obtained which moreover allows through a high measure of sunlight and is relatively heat-resistant. Because the insulating sleeve is so simple and light in weight it is possible to also apply it for a tubular member of comparatively large diameter, such as a storage tank of an ICS. It is hereby possible to dispense with the insulating layers along the walls of the housing of the collector normally necessary with such an ICS, thus achieving a construction which is simpler and requires less space, and an ICS can thus be made suitable for installation on instead of in the roof construction of a building.

In preference the supports are likewise manufactured from a transparent material, such as for instance glass. A stiff, inexpensive but still very transparent sleeve construction is thus obtained.

The supports preferably run in the longitudinal direction of the insulating sleeve so that use can be made of simple rod- or wire-like supports.

In addition, the transparent foil is preferably manufactured from a fluoroethene-containing polymer material such as for instance FEP (fluorinated ethene propene) which is highly transparent and is particularly permeable to infrared radiation.

When the tubular member forms a storage container for the medium for heating, the device can be embodied as an ICS for placing on the roof of a building, whereby the space occupied in the building is minimized.

The container can be arranged in known manner at a distance from the mirror surface and have means for enlarging its absorption surface. By enlarging the absorption surface of the container, flatter mirror surfaces can be applied, whereby the walls of the housing enclosing the container can be lowered, which results in a saving of construction material and a more attractive appearance. A robust and inexpensive solution is then obtained herein when the mirror surface comprises at least one relatively flat, evolvent segment partly enclosing the container and the absorption surface enlarging means comprise at least one absorption member extending in the direction of the mirror surface. An evolvent mirror surface can be manufactured simply and at low cost, while the absorption member can take the form of a simple flat plate. The mirror surface can herein comprise two intersecting, relatively flat evolvent segments placed mutually adjacently, and the absorption member can extend from the container to a position close to the intersecting line of the segments.

The transparent wall preferably has a convex shape and the container protrudes beyond the non-transparent walls into the space defined by the transparent wall. A flatter and aesthetically less intrusive external form of the device is hereby obtained, which will arouse little opposition even when installed on top of a roof.

In preference the housing is connected to the outside environment through at least one opening provided with filter means. Pressure differences resulting from changing ambient conditions can hereby be offset, while the mirror surfaces are moreover prevented from being dirtied by the ingress of dust, whereby the efficiency of the device would be reduced.

From a structural viewpoint it is desirable that the container is cylindrical and has spherical end surfaces, wherein the absorption surface enlarging means further comprise absorption members protruding from the end surfaces and continuing the cylindrical form of the container. The cylindrical form and spherical end surfaces result in a comparatively great strength and stiffness of the container, while the additional absorption members increase still further the efficiency of the device.

The invention also relates to a system for distributing a medium for heating which is provided with a source of cold medium and a pipe system connecting the source to at least one tap point, in which system is incorporated at least one radiation heating device of the above described type. At least one adjustable afterheating device is preferably arranged in such a distribution system between the radiation heating device and the tap point. A constant or at least properly adjustable temperature of the medium at the tap point can hereby be guaranteed in all weather conditions.

Finally, the invention relates to a building provided with a distribution system as described above. In such a building the radiation heating device is preferably arranged on the outside and only connected through a passage opening to the pipe system arranged inside the building. The structural operations on the building itself are hereby minimal, whereby the installation costs of the radiation heating device remain limited.

The invention will now be elucidated on the basis of two embodiments, wherein reference is made to the annexed drawing, in which corresponding components are designated with the same reference numerals, and in which:
Fig. 1 shows a cross section through a first embodiment of the radiation heating device according to the invention,
Fig. 2 shows a partly cut away perspective view of a second embodiment of the radiation heating device according to the invention, and
Fig. 3 is a sectional view along the line III-III in fig. 2.

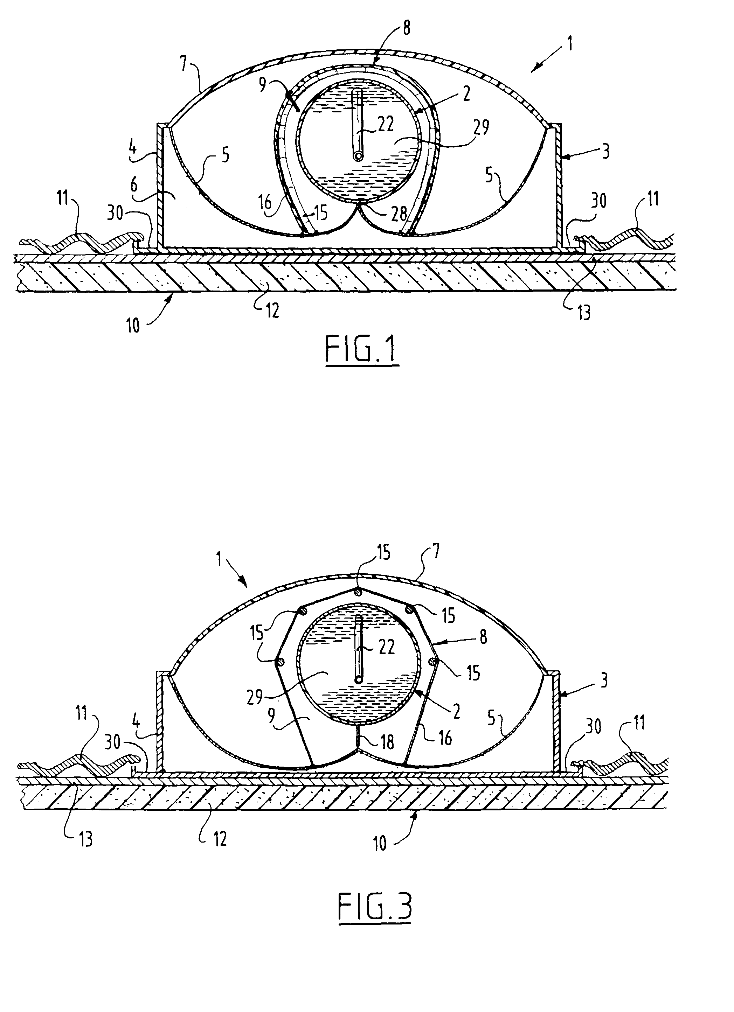

A device 1 (fig. 1) for heating a medium by radiation is provided with a storage container 2 for the medium 29 for heating which is accommodated in a housing 3. The latter comprises a lower part 4 which is formed by a number of non-transparent walls and which is covered by a transparent wall 7 having a convex progress. Arranged in housing 3 is a plurality of mirror surfaces 5, in the case shown in the form of two so-called evolvent mirrors placed mutually adjacently and intersecting in a line 28. With their special shape these evolvent mirrors 5 ensure that all solar radiation falling on housing 3 which passes through the container 2 is nevertheless reflected onto it. The end walls 31 of housing 3 are also covered on the inside with reflective material. Container 2 is coated with radiation-absorbing material, for instance a black paint layer or a spectrally selective layer.

In order to limit as far as possible convective heat losses from container 2 and thereby increase the efficiency of the radiation heating device 1 as much as possible, a transparent, heat-resistant insulating sleeve 8 is arranged round container 2. This insulating sleeve 8, which in the embodiment shown takes the form of a transparent heat-resistant foil 16 tensioned on a plurality of glass supports or elements 15 arranged spaced apart and curved round the container 2, bounds an intermediate space 9 in which is situated an insulating air layer. With this form of insulation the transparent insulating layer under the transparent cover 7 and the insulating layer between the mirrors 5 and the non-transparent walls 4 known from a conventional ICS can be dispensed with. The space 6 between mirrors 5 and walls 4 can thereby remain free for other purposes, such as for instance accommodating construction elements, the passage of pipes and the like. The construction is hereby simplified and can moreover be relatively light weight.

Because the transparent wall 7 moreover has a convex shape and container 2 protrudes beyond the non-transparent walls 4 in the space defined thereby, a relatively compact device is obtained which can be placed without problem on instead of in a roof construction 10. For this purpose the housing 3 has a peripheral edge 30 which extends under the roof covering surrounding housing 3, which in the depicted case is formed by roof tiles 11. The roof construction 10 otherwise consists in the case shown of an insulation layer 12 and the actual boarding 13.

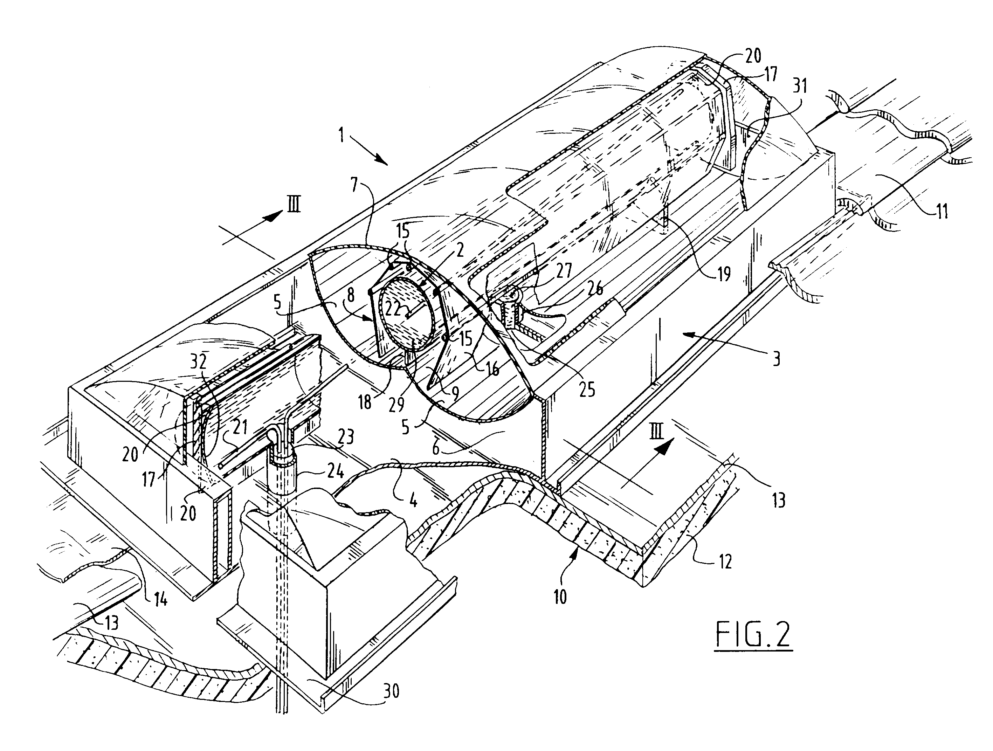

In an alternative embodiment of the device 1 (fig. 2), the curved glass supports 15 of the insulating sleeve 8 are replaced by a number of supports 15 extending in longitudinal direction of the container 2. Understood here by "heat-resistant" materials are materials which retain their properties at an ambient temperature of 150°C. A suitable material for the foil is for instance a fluoroethene-containing polymer such as FEP, which is moreover strong, inexpensive and well permeable to infrared radiation. The supports 15 are each likewise manufactured from a heat-resistant material which is preferably transparent and moreover stiff, such as for instance glass, and are received at their outer end in corresponding recesses in an end plate 17. Because the longitudinal supports 15 are stiff, no separate provisions such as tensioning wires or the like are required to preserve the desired shape of the insulating sleeve 8. It is of course also possible to replace the rod-like supports 15 by wire-like supports which must then be tensioned between end plates 17. These end plates 17 can also be covered with mirror material. This construction of insulating sleeve 8 is inexpensive and very light in weight, but nevertheless very robust.

In the embodiment shown the evolvent mirrors take a comparatively flat form. The side walls of housing 3 can hereby be relatively low, whereby the ICS is less conspicuous and the degree of acceptance thereof is increased. In order to ensure that with these relatively flat mirrors 5 all incident radiation which passes through container 2 is still reflected back thereon, the container is provided with means 18,20 for enlarging its absorption surface. In the embodiment shown these absorption surface enlarging means comprise a flat absorption member 18 arranged on the underside of container 2 and extending toward the intersecting line of the mirror segments 5, which member 18 is likewise coated with an absorbent material such as a black paint layer or a spectrally selective layer. The absorption member 18 is of course manufactured from a material with a good heat conductivity, such as a metal. Radiation which passes through tank 2 and is reflected by the mirror segments 5 to the absorption member 18 is hereby absorbed and transferred to the container 2 in the form of heat.

From structural considerations the container 2 is embodied cylindrically and provided with spherical end surfaces 32. The space between these end surfaces 32 and the mounting plate 17 for the longitudinal supports 15 could result in loss of efficiency through loss of radiation. The absorption surface enlarging means therefore comprise absorption members 20 protruding further from the end surfaces 32 and continuing the cylindrical form of container 2 as far as the end plate 17. These absorption members 20 are also manufactured from a good heat conducting material and coated with an absorption layer.

In order to limit heat losses from device 1 as far as possible, all walls 4,7 are in principle airtight and moreover each connected in mutually airtight manner. However, in order to offset pressure differences which can occur as a result of variations in the ambient temperature and pressure, without this resulting in an excessively rigid and therefore heavy construction, housing 3 is provided with an aerating and venting opening 25 which communicates with the outside environment, for instance the space under the roof 10. In order to prevent as far as possible the ingress through the aerating and venting opening 25 of dust particles which could adhere to the mirrors 5,31 and the insulating sleeve 8 and thereby have an adverse effect on the efficiency of the device 1, a filter unit 27 is arranged in the aerating and venting opening 25 consisting of a quantity of filter material received in a tubular body 26. With this filter 27 the interior of the housing 3 can remain dust-free for the whole lifespan of device 1 which, since it involves a building structure, will generally amount to about 30 years.

For feed and drain of the medium for heating 29 to container 2 a feed pipe 21 and the drain pipe 22 are further arranged in container 2, each of which connects through a lead-through 24 in the roof 10 to a pipe system in the building on which this device 1 is arranged. In order to prevent freezing of pipes 21,22, they are arranged in an insulating plug 23. The drain pipe 22 will otherwise generally be connected to an afterheating device, for instance a conventional electric or gas-fired boiler, whereby a constant supply of medium 29 at a desired adjustable temperature is ensured in all weather conditions.

## Claims

1. Device (1) for heating a medium (29) by radiation, provided with a tubular member (2) which is arranged in a housing (3) which has at least one transparent wall (7) and at least one mirror surface (5,31) and through which the medium (29) for heating flows, and a transparent insulating sleeve (8) enclosing the tubular member (2) with an interspace (9), **characterized in that** the insulating sleeve (8) comprises a transparent foil (16) tensioned on a plurality of supports (15).

2. Radiation heating device (1) as claimed in claim 1, **characterized in that** the supports (15) are manufactured from a transparent material.

3. Radiation heating device (1) as claimed in claim 1 or 2, **characterized in that** the supports (15) run in the longitudinal direction of the insulating sleeve (8).

4. Radiation heating device (1) as claimed in any of the foregoing claims, **characterized in that** the transparent foil (16) is manufactured from a fluoroethene-containing polymer material.

5. Radiation heating device (1) as claimed in any of the foregoing claims, **characterized in that** the tubular member (2) forms a storage container for the medium (29) for heating.

6. Radiation heating device (1) as claimed in any of the foregoing claims, wherein the container (2) is arranged at a distance from the mirror surface (5,31) and has means (18,20) for enlarging the absorption surface thereof, **characterized in that** the mirror surface (5) comprises at least one relatively flat evolvent segment partly enclosing the container (2), and the absorption surface enlarging means (18,20) comprise at least one absorption member (18) extending in the direction of the mirror surface (5).

7. Radiation heating device (1) as claimed in claim 6, **characterized in that** the mirror surface (5,31) comprises two intersecting, relatively flat evolvent segments placed mutually adjacently, and the absorption member (18) extends from the container (2) to a position close to the intersecting line of the segments (5).

8. Radiation heating device (1) as claimed in any of the foregoing claims, **characterized in that** the transparent wall (7) has a convex shape and the container (2) protrudes beyond the non-transparent walls (4) into the space defined by the transparent wall (7).

9. Radiation heating device (1) as claimed in any of the foregoing claims, **characterized in that** the housing (3) is connected to the outside environment through at least one opening (25) provided with filter means (27).

10. Radiation heating device (1) as claimed in any of the foregoing claims, **characterized in that** the container (2) is cylindrical and has spherical end surfaces (32) and the absorption surface enlarging means (18;20) further comprise absorption members (20) protruding from the end surfaces (32) and continuing the cylindrical form of the container (2).

11. System for distributing a medium for heating which is provided with a source of cold medium and a pipe system connecting the source to at least one tap point, in which system is incorporated at least one radiation heating device (1) as claimed in any of the foregoing claims.

12. Distribution system as claimed in claim 11, **characterized in that** at least one adjustable afterheating device is arranged between the radiation heating device (1) and the tap point.

13. Building provided with a distribution system as claimed in claim 11 or 12, **characterized in that** the radiation heating device (1) is arranged on the outside thereof and is only connected through a passage opening (24) to the pipe system arranged inside the building.

## Patentansprüche

1. Vorrichtung (1) zur Erhitzung eines Mediums (29) durch Strahlung, welche ein rohrförmiges Bauteil (2) aufweist, das in einem Gehäuse (3) angeordnet ist, welches Gehäuse wenigstens eine transparente Wand (7) und wenigstens eine Spiegeloberfläche (5, 31) besitzt und durch das das Medium (29), welches erhitzt werden soll, strömt, wobei das Gehäuse eine transparente Isolierhülse (8) aufweist, die den rohrförmigen Körper (2) unter Belassung eines Zwischenraums (9) umschließt,
dadurch gekennzeichnet, daß die Isolierhülse (8) aus einer transparenten Folie (16) besteht, die auf mehreren Trägern (15) aufgespannt ist.

2. Strahlungs-Heizvorrichtung (1) nach Anspruch 1,
dadurch gekennzeichnet, daß die Träger (15) aus einem transparenten Material bestehen.

3. Strahlungs-Heizvorrichtung (1) nach den Ansprüchen 1 oder 2,
dadurch gekennzeichnet, daß die Träger (15) in Längsrichtung der Isolierhülse (8) verlaufen.

4. Strahlungs-Heizvorrichtung (1) nach einem der vorhergehenden Ansprüche,
dadurch gekennzeichnet, daß die transparente Folie (16) aus einem Fluoräthylen enthaltenden Polymermaterial hergestellt ist.

5. Strahlungs-Heizvorrichtung (1) nach einem der vorhergehenden Ansprüche,
dadurch gekennzeichnet, daß der rohrförmige Körper (2) einen Speicherbehälter für das zu erhitzende Medium (29) bildet.

6. Strahlungs-Heizvorrichtung (1) nach einem der vorhergehenden Ansprüche, bei welcher der Behälter (2) in einem Abstand von der Spiegeloberfläche (5, 31) angeordnet ist und Mittel (18, 20) besitzt, um die Absorptionsoberfläche hiervon zu vergrößern,
dadurch gekennzeichnet, daß die Spiegeloberfläche (5) wenigstens ein relativ flaches Evolventensegment besitzt, das den Behälter (2) teilweise umschließt und daß die die Absorptionsoberfläche vergrößernden Mittel (18, 20) wenigstens ein Absorptionsglied (18) umfassen, das sich in Richtung der Spiegeloberfläche (5) erstreckt.

7. Strahlungs-Heizvorrichtung (1) nach Anspruch 6,
dadurch gekennzeichnet, daß die Spiegeloberfläche (5, 31) zwei einander schneidende, relativ flache Evolventensegmente aufweist, die benachbart zueinander angeordnet sind und daß das Absorptionsglied (18) sich vom Behälter 2 nach einer Stelle benachbart zu der Schnittlinie der Segmente (5) erstreckt.

8. Strahlungs-Heizvorrichtung (1) nach einem der vorhergehenden Ansprüche,
dadurch gekennzeichnet, daß die transparente Wand (7) eine konvexe Gestalt besitzt und der Behälter (2) über die nicht transparenten Wände (4) in den Raum vorsteht, der durch die transparente Wand (7) definiert wird.

9. Strahlungs-Heizvorrichtung (1) nach einem der vorhergehenden Ansprüche,
dadurch gekennzeichnet, daß das Gehäuse (3) mit der äußeren Umgebung über wenigstens eine Öffnung (25) verbunden ist, die mit einem Filter (27) ausgerüstet ist.

10. Strahlungs-Heizvorrichtung (1) nach einem der vorhergehenden Ansprüche,
dadurch gekennzeichnet, daß der Behälter (2) zylindrisch ausgebildet ist und sphärische Endoberflächen (32) besitzt und daß die die Absorptionsoberfläche vergrößerenden Mittel (18, 20) außerdem Absorptionsglieder (20) aufweisen, die von den Endflächen (32) vorstehen und die Zylinderform des Behälters (2) fortsetzen.

11. System zur Verteilung eines Mediums zur Erhitzung, welches mit einer Quelle eines kalten Mediums und einem Rohrsystem ausgerüstet ist, das die Quelle mit wenigstens einem Abzapfpunkt verbindet, wobei in diesem System wenigstens eine Strahlungs-Heizvorrichtung (1) nach einem der vorhergehenden Ansprüche angeordnet ist.

12. Verteilersystem nach Anspruch 11,
dadurch gekennzeichnet, daß wenigstens eine einstellbare Nach,heizvorrichtung zwischen der Strahlungs-Heizvorrichtung (1) und dem Abzapfpunkt vorgesehen ist.

13. Gebäude, welches mit einem Verteilersystem nach den Ansprüchen 11 oder 12 versehen ist,
dadurch gekennzeichnet, daß die Strahlungs-Heizvorrichtung (1) auf der Außenseite des Gebäudes angeordnet ist und nur über eine Kanalöffnung (34) mit dem Rohrsystem verbunden ist, das innerhalb des Gebäudes befindlich ist.

## Revendications

1. Dispositif (1) pour chauffer un milieu (29) par rayonnement, muni d'un élément tubulaire (2) qui est disposé dans un bâti (3) qui a au moins une paroi transparente (7) et au moins une surface de miroir (5, 31) et à travers lequel passe le milieu (29) à chauffer, et une gaine isolante transparente (8) renfermant l'élément tubulaire (2) avec un espacement (9), caractérisé en ce que la gaine isolante (8) comprend une feuille transparente (16) tendue sur une pluralité de supports (15).

2. Dispositif de chauffage par rayonnement (1) selon la revendication 1, caractérisé en ce que les supports (15) sont fabriqués dans un matériau transparent.

3. Dispositif de chauffage par rayonnement (1) selon la revendication 1 ou 2, caractérisé en ce que les supports (15) s'étendent dans la direction longitudinale de la gaine isolante (8).

4. Dispositif de chauffage par rayonnement (1) selon l'une quelconque des revendications précédentes, caractérisé en ce que la feuille transparente (16) est réalisée dans un matériau polymère contenant de l'éthylène fluoré.

5. Dispositif de chauffage par rayonnement (1) selon l'une quelconque des revendications précédentes, caractérisé en ce que l'élément tubulaire (2) constitue un bac de stockage pour le milieu (29) à chauffer.

6. Dispositif de chauffage par rayonnement (1) selon l'une quelconque des revendications précédentes, caractérisé en ce que le bac (2) est disposé à une certaine distance de la surface du miroir (5, 31) et présente des moyens (18, 20) destinés à agrandir sa surface absorbante, caractérisé en ce que la surface de miroir (5) comprend au moins un segment de forme évolutive relativement aplatie contenant le bac (2), et les moyens d'agrandissement de la surface absorbante (18, 20) comprennent au moins un élément absorbant (18) s'étendant dans la direction de la surface du miroir (5).

7. Dispositif de chauffage par rayonnement (1) selon la revendication 6, caractérisé en ce que la surface du miroir (5, 31) comprend deux segments relativement aplatis de forme évolutive qui se coupent et sont disposés de manière mutuellement adjacente, et l'élément absorbant (18) s'étend du bac (2) à un emplacement proche de la ligne d'intersection des segments (5).

8. Dispositif de chauffage par rayonnement (1) selon l'une quelconque des revendications précédentes, caractérisé en ce que la paroi transparente (7) présente une forme convexe et le bac (2) dépasse des parois non transparentes (4) pour faire saillie dans l'espace défini par la paroi transparente (7).

9. Dispositif de chauffage par rayonnement (1) selon l'une quelconque des revendications précédentes, caractérisé en ce que le bâti (3) est raccordé à l'environnement extérieur par au moins une ouverture (25) munie de moyens filtrants (27).

10. Dispositif de chauffage par rayonnement (1) selon l'une quelconque des revendications précédentes, caractérisé en ce que le bac (2) est cylindrique et a des surfaces d'extrémité sphériques (32) et les moyens d'agrandissement de la surface absorbante (18, 20) comprennent en outre des éléments absorbants (20) dépassant des surfaces d'extrémité (32) et reprenant la forme cylindrique du bac (2).

11. Système pour distribuer un milieu à chauffer qui est muni d'une source de milieu froid et d'un réseau de tuyauterie raccordant la source à au moins un point de soutirage, au moins un dispositif de chauffage par rayonnement (1) selon l'une quelconque des revendications précédentes étant intégré dans ledit système.

12. Système de distribution selon la revendication 11, caractérisé en ce qu'au moins un dispositif de chauffage ultérieur réglable est disposé entre le dispositif de chauffage par rayonnement (1) et le point de soutirage.

13. Bâtiment doté d'un système de distribution selon la revendication 11 ou 12, caractérisé en ce que le dispositif de chauffage par rayonnement (1) est disposé à l'extérieur et est uniquement raccordé par une ouverture de passage (24) au réseau de tuyauterie disposé à l'intérieur du bâtiment.
